(19) Europäisches Patentamt
European Patent Office
Office européen des brevets

(11) **EP 4 542 457 A1**

# (12) EUROPEAN PATENT APPLICATION

(43) Date of publication:
**23.04.2025 Bulletin 2025/17**

(21) Application number: **23205496.5**

(22) Date of filing: **24.10.2023**

(51) International Patent Classification (IPC):
**G06N 10/60** *(2022.01)* **G06N 10/40** *(2022.01)*

(52) Cooperative Patent Classification (CPC):
**G06N 10/60; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.10.2023 EP 23020479**

(71) Applicant: **Kipu Quantum GmbH**
**76137 Karlsruhe (DE)**

(72) Inventors:
• **SIMEN, Anton**
**10407 Berlin (DE)**
• **HEGADE, Narendra**
**560099 Karnataka (IN)**
• **de OLIVEIRA, Murilo**
**12249 Berlin (DE)**
• **KUMAR, Shubham**
**834002 Ranchi (IN)**
• **FÜCHSEL, Gernot**
**14482 Potsdam (DE)**
• **SOLANO, Enrique**
**10405 Berlin (DE)**

(74) Representative: **Sonnenberg Harrison Partnerschaft mbB**
**Herzogspitalstraße 10a**
**80331 München (DE)**

## (54) EVOLUTIONARY METHOD FOR SOLVING AN OPTIMIZATION PROBLEM FOR DIGITAL-ANALOG QUANTUM COMPUTING

(57) **Summary**

The invention pertains to a computer-implemented method for solving an optimization problem with a given quantum hardware using a Digital-Analog Quantum Computation (DAQC) operation in a multi-qubit system.

According to the invention, the method comprises, by using a central processing unit (CPU):
- receiving a problem Hamiltonian being defined based on the multi-qubit system and indicative of at least one first pair of interconnected qubits in the multi-qubit system, the problem Hamiltonian encodes the optimization problem and is indicative of at least one second pair of interconnected qubits in the multi-qubit system;
- based on the problem Hamiltonian, obtaining an intermediate quantum circuit for performing the DAQC operation, the intermediate quantum circuit comprising at least one analog block, and the at least one analog block having a set of operating parameters;
- based on the intermediate quantum circuit and a pool of operators provided by the given quantum hardware, obtaining an optimal set of digital and analog operations to optimize a cost function encoded in the problem Hamiltonian, obtaining an optimal quantum circuit for performing the DAQC operation; and
- providing an optimal quantum circuit to a quantum processing unit (QPU).

Figure 2

## Description

The invention relates to quantum computing. Certain embodiments are defined by the appended independent and dependent claims.

The invention also relates to a computer-implemented method for enhancing solutions for digital-analog quantum computing (DAQC), enabling a generalization for any optimization problem. In particular embodiments, the method is based on Digital-Analog Quantum Computing (DAQC).

## Background of the Invention

Quantum computing is a framework for computation, which aims at outperforming classical computation by exploiting quantum mechanical phenomena. In this regard, it is necessary to introduce a qubit, which is a basic unit of quantum information.

The qubit may be considered as the quantum analog of a classical bit. It is representative of a physical system that may be in two different states, generally denoted by $|0\rangle$ and $|1\rangle$, as well as in a superposition of those two states, e.g., $\frac{(|0\rangle+|1\rangle)}{\sqrt{2}}$. This plays an important role in the development of quantum algorithms outperforming classical algorithms. One example of the physical device that may be used as a qubit is an electron spin.

The time evolution of qubits is specified by a unitary operator acting on qubit states. The unitary operator plays the role of a gate in the quantum computing. In general, these gates are generated via some Hamiltonian that makes a qubit system to evolve in time. This is an analog approach, and it has the disadvantage that both time and the Hamiltonian need to be specified. Generally, a unitary matrix needs to be provided, but there may be more than one way of generating it via different Hamiltonians and times. Furthermore, these implementations vary between different quantum computer architectures. For digital quantum computation (DQC), it is required to specify only the unitary matrix to be used to evolve the qubits.

An alternative approach is Digital-Analog Quantum Computing (DAQC), which uses single qubit rotations as digital blocks and uses analog evolutions as multi-qubit gates (analog blocks). The DAQC paradigm leads to fewer errors and higher fidelities, as compared to the DQC paradigm. However, some current quantum computer architectures (e.g., those based on Rydberg atoms) are not able to efficiently tune multi-qubit couplings during a computing operation.

## Short Description of the Invention

This summary is provided to introduce a selection of concepts in a simplified form that are further described below in the detailed description. This summary is not intended to identify key features of the invention, nor is it intended to be used to limit the scope of the invention.

The objective of the invention is to provide a technical solution that allows to obtain an optimal quantum circuit in terms of circuit depth to implement digital analog quantum computing in a given quantum hardware that can outperform digital quantum computing.

This objective is achieved by the features of the independent claims in the appended claims. Further embodiments and examples are apparent from the dependent claims, the detailed description, and the accompanying drawings of the figures.

In a first aspect, the invention pertains to a computer-implemented method for solving an optimization problem with a given quantum hardware using a Digital-Analog Quantum Computation (DAQC) operation in a multi-qubit system.

The method comprises by using a central processing unit (CPU):

- receiving a problem Hamiltonian being defined based on the multi-qubit system and indicative of at least one first pair of interconnected qubits in the multi-qubit system, the problem Hamiltonian being defined based on the DAQC operation encodes the optimization problem and is indicative of at least one second pair of interconnected qubits in the multi-qubit system;

- based on the problem Hamiltonian, obtaining an intermediate quantum circuit for performing the DAQC operation, the intermediate quantum circuit comprising at least one analog block, and the at least one analog block having a set of operating parameters;

- based on the intermediate quantum circuit and a pool of operators provided by the given quantum hardware, obtaining an optimal set of digital and analog operations (with reduced circuit depth compared to the digital quantum simulation) to optimize a cost function encoded in the problem Hamiltonian (describing the optimization problem), obtaining an optimal (or "final") quantum circuit (also referred to as an optimal child circuit, as will be explained below) for performing the DAQC operation; and

- providing an optimal quantum circuit to a quantum processing unit (QPU).

For all the chosen quantum hardware there exists a native, implementable set of analog global interactions, also referred to as analog blocks, and a set of single qubit rotation gates called digital gates. If, for example, the optimization problem is solved by using the method of the invention using a trapped-ion quantum system, the allowed analog operations are given by $O = e^{-i\alpha\Sigma_{i<j}X_iX_j}$. Each chosen hardware provides a specific implementable analog block. The method of the invention can be universally used on any hardware. The pool of operators (interactions native to the hardware) of the chosen hardware is used as input to the algorithm. In the Example section, the pool of operators available in trapped ion quantum computers is described.

In certain embodiments of the method of the invention, the set of operating parameters of the at least one analog block comprises rotation angles as an adjustable parameter.

In certain embodiments of the method of the invention, the cost function is represented by an expectation value of the problem Hamiltonian or, if quantum machine learning is applied, by an empirical risk.

In certain embodiments of the method of the invention, the cost function is minimized to find an optimal solution to the optimization problem.

In certain embodiments of the method of the invention, each qubit in the intermediate quantum circuit is initialized, in particular in the 10) state or another predefined state suitable for the given problem, generating a first parent circuit and providing at least one copy of the first parent circuit.

In certain embodiments of the method of the invention, a quantum evolutionary algorithm, such as a tree-based optimization algorithm, is applied to the first parent circuits to generate (at least one) a plurality of first child quantum circuits. The first child quantum circuits comprise a set of analog blocks and digital gates that minimizes the cost function and provide a solution to the optimization problem at hand.

A "plurality" means two or more, for example 2, 3, 4, 5, 6, 10 or more.

A tree-based optimization algorithm is an algorithm that utilizes a tree structure to represent solutions or search spaces in an optimization problem. The algorithm typically manipulates these trees to explore and search the solution space efficiently.

In certain embodiments of the method of the invention, the quantum evolutionary algorithm applies actions on the first parent circuits (or any other parent circuit of higher order), wherein the actions are chosen from the group consisting of insertion, modification, deletion, and/or swapping of circuit elements.

Regarding the possible actions performed on a quantum circuit, insertion means to insert a new quantum gate with respect to an analog and/or digital block in a random position in the quantum circuit. Modification means to modify a rotation angle of a randomly existing quantum gate with respect to an analog and/or digital block. Deletions means to delete an existing random quantum gate in the quantum circuit with respect to an analog and/or digital block. Swapping means to change the order of the qubits in an existing quantum gate with respect to the analog block).

In certain embodiments of the method of the invention, the cost function of the first child quantum circuits is evaluated such that the best of the first child quantum circuits is chosen as a second parent circuit from which copies are being generated and on which the quantum evolutionary algorithm is applied to generate a plurality of second child quantum circuits.

In certain embodiments of the method of the invention, the steps of generating child circuits from a parent circuit using the quantum evolutionary algorithm and then determining the best child circuit to become the next parent circuit is reiterated until the optimal quantum circuit (which is also an optimal child circuit) is obtained.

In certain embodiments of the method of the invention, the intermediate quantum circuit is optimized, comprising the insertion, modification, deletion, and/or swapping of circuit elements (wherein the circuit elements comprises quantum gates, i.e. an analog or digital block).

In certain embodiments of the method of the invention, the optimization of the quantum circuit comprises interative steps until an optimal or near-optimal circuit configuration is reached.

In certain embodiments of the method of the invention, a classical feedback mechanism (algorithm) is used to retaining only those operations that optimally contribute to the objective function. The classical feedback mechanism comprises selecting the best circuit according to the evaluated expectation value of the problem Hamiltonian.

In a second aspect, the invention pertains to a data processing apparatus (or device or system) comprising means for carrying out the method described herein.

In a third aspect, the invention pertains to a computer program [product] comprising a computer-readable storage medium, wherein the computer-readable storage medium stores a computer code which, when executed by at least one central processing unit (CPU) causes the CPU to perform the method described herein.

In a fourth aspect, the invention pertains to a computer program [product] comprising instructions which, when the program is executed by a computer, cause the computer to carry out the method described herein.

In a fifth aspect, the invention pertains to a computer program [product] comprising a computer-readable storage medium, wherein the computer-readable storage medium stores a computer code which, when executed by at least one central processing unit (CPU), causes the CPU to perform the method described herein.

In a fifth aspect, the invention pertains to the use of an evolutionary optimization algorithm to solve an optimization problem with a given quantum hardware using a Digital-Analog Quantum Computation (DAQC) operation in a multi-qubit system.

Other features and advantages of the invention

## Detailed Description of the Invention

Various embodiments of the invention are further described in more detail with reference to the accompanying drawings. However, the invention may be embodied in many other forms and should not be construed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

In the realm of variational quantum algorithms, a commonly adopted strategy for crafting quantum circuits involves using a specific variable structure that remains fixed in shape. Within this framework, the adjustable parameters take the form of rotation angles. To enhance the likelihood of achieving favorable outcomes, the complexity of the variable circuit needs to be increased. This entails elevating the number of adjustable parameters and, consequently, the number of quantum operations involved. As one might expect, fine-tuning these parameters becomes more computationally intensive. Moreover, when implementing experiments on the latest Noisy Intermediate-Scale Quantum (NISQ) devices, the elevated quantum operation count leads to increased noise.

The implementation of native operations on a quantum computer allows for more faithful execution of complex circuits. DAQC enables analog blocks provided by quantum hardwares such as trapped ions, superconducting circuits, neutral atoms, photonics, spin qubits, etc. to be combined with digital blocks. However, due to the limited hardware specifications for different systems, it is challenging to use only the analog blocks to address generic optimization problems. This can be overcome by considering digital gates operations along with analog blocks to address arbitrary optimization problems that are of interest for industrial use cases. Once this is addressed, DAQC becomes a candidate paradigm to achieve quantum advantage in the NISQ era.

The present invention allows introducing an algorithm capable of selecting a pertinent set of implementable analog operations along with, for example, digital single rotations from any quantum hardware specification, thus substantially augmenting the probability of achieving optimal solutions using shallow-depth quantum circuits. Through a classical feedback mechanism harnessed, for example, by a tree-based optimization procedure, the algorithm adaptly retains within the circuit solely those operations that offer optimal contributions to the objective function.

A certain embodiment of the method of the invention (algorithm) is summarized in the steps given below.

Step 1: Input: In general, the method of the invention can be used on any optimization problem. These optimization problems can be, for example, combinatorial optimization problems, solving linear systems of equations, many-body ground state preparation, quantum chemistry (molecular ground state finding), and quantum machine learning (QML).

Step 2: Encoding the solution of these optimization problems in the ground state of a many-body Hamiltonian.

Step 3: Choosing the hardware of interest. Such hardware can be, for example, a trapped-ion quantum computer or simulator, a neutral-atom quantum computer or simulator, a superconducting quantum computer or simulator, a photonic quantum computer or simulator, and a spin-based quantum computer or simulator.

Step 4: The chosen hardware creates a pool of operators consisting of native analog global interactions, also referred to as analog blocks, and a set of single qubit rotation gates called digital gates. If, for example, the optimization problem is solved by using the method of the invention using a trapped-ion quantum system, the allowed analog operations are given by $O = e^{-i\alpha \sum_{i<j} X_i X_j}$.

Step 5: Defining a cost function that has to be minimized in order to find an optimal solution to a given optimization problem. In some embodiments, the cost function is the expectation value of a given problem Hamiltonian. In other embodiments, in particular in the case of Quantum Machine Learning (QML), the cost function may be represented as an empirical risk.

Step 6: Using a Quantum evolutionary algorithm (for example, a tree-based optimization algorithm) to construct an efficient quantum circuit consisting of a set of analog blocks and digital gates (chosen from an operator pool defined in step 4) that minimizes the given cost function and hence provides a solution to a given problem. A tree-based optimization algorithm is an algorithm that utilizes a tree structure to represent solutions or search spaces in an optimization problem. The algorithm typically manipulates these trees to explore and search the solution space efficiently.

Step 7: To achieve Step 6, in certain embodiments, one starts with an n-qubit quantum circuit where each qubit is initialized in either the 10) state or some predefined state suitable for the given problem. This initial circuit is called a parent circuit for the next step.

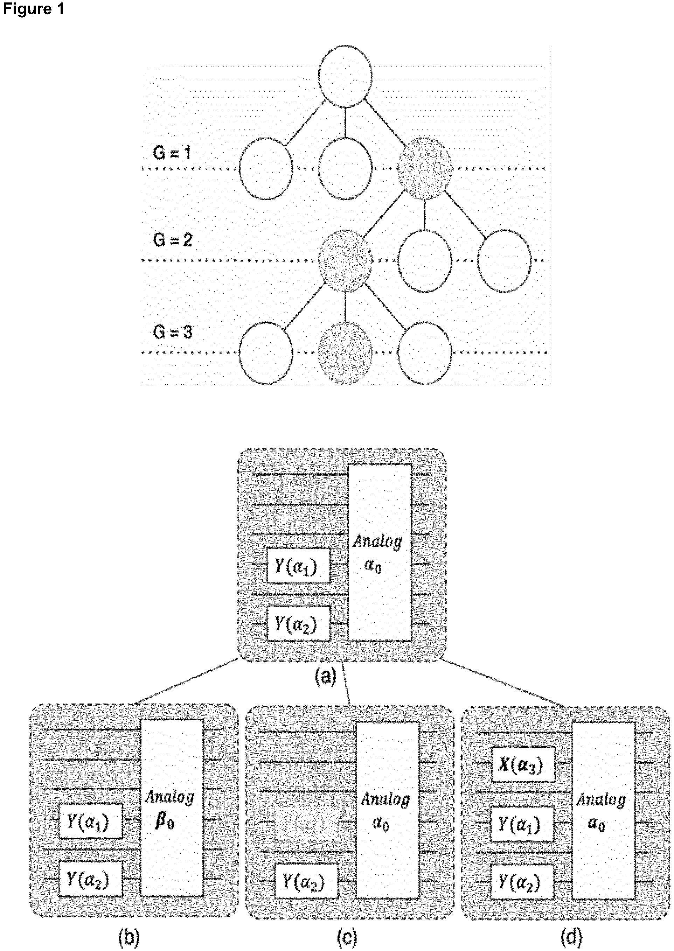

Step 8: K copies (the integer K representing the number of copies of a parent quantum circuit) of the quantum circuit as described in step 7 are generated and actions are performed on each copy to generate K child quantum circuits. The actions are - Insert, Modify, Delete, and SWAP (see also Fig. 1). In certain embodiments, the number of copies K and the probability to perform a specific action is depending on the optimization problem at hand. Since the actions are probabilistic, each child circuit is likely to take a different form.

Step 9: Evaluate the cost function for all the child circuits and chose the best quantum circuit as a new parent circuit for the next generation. The best quantum circuit is the one with lowest cost function value (expectation value).

Step 10: Perform Steps 8 and 9 reiteratively until a certain criterion is reached. Such a criterion could be, for example, the number of generations, the coherence time (circuit depth) of the hardware or the error threshold.

Step 11: Extract the solution to a given optimization problem from the final, the optimal quantum circuit.

Definitions

Quantum gate:
A quantum gate is a fixed unitary evolution. An example is a multi-qubit operation:

$$U_N = e^{i\pi/4}\sigma_1^z\sigma_2^z.$$

Digital block:
A digital block is a fixed unitary evolution up to a set of local rotations. The examples are parameter-fixed entangling quantum gates and single qubit rotations with arbitrary angles as

$$U_N(\phi) = (e^{i\phi_1}\sigma_1^z \otimes e^{i\phi_2}\sigma_2^z)e^{i\pi/4}\sigma_1^z\sigma_2^z,$$

and

$$U_i(\phi) = e^{i\phi}\sigma_1^z.$$

Analog block:
An analog block is a parametrized entangling unitary evolution. An example is a parameter-dependent multi-qubit operation.

$$U_A(\phi) = e^{i\phi}\sigma_1^z\sigma_2^z.$$

Problem Hamiltonian:
The problem Hamiltonian (also referred to here as target Hamiltonian) is the Hamiltonian that needs to be mapped to the quantum computer or simulator and simulated using DAQC.

Expectation value:
An expectation value is a mean value obtained after several repetitions of single experimental measurements of a physical quantity in a quantum experiment.

Digital-analog quantum computing (DAQC):

DAQC aims to combine the digital and analog methods in terms of digital pulses and natural interactions provided by a given system to produce efficient simulations with low error and high flexibility. DAQC exhibits superior scalability than solely digital approaches in the same noisy intermediate scale quantum (NISQ) devices by combining digital methods (which offer flexibility) with analog approaches (which are robust against errors). In line with the NISQ era, this hybrid approach seeks to minimize the number of quantum gates required for computation.

DAQC takes advantage of the inherent interactions offered by the platform system's Hamiltonian along with single-qubit rotations to perform efficient computation. The native interactions provide the analog part of the simulation while the single and multi-qubit gates provide the digital part. The task is to find a mapping between these digital and analog blocks and the target Hamiltonian to be simulated. Different platforms provide different sets of analog and digital blocks and hence a suitable mapping needs to be implemented. In the method of the invention, different terms such as individual qubit or resonator and qubit-resonator interactions, offered by the digital-analog simulator can be turned on or off to reach the target Hamiltonian. This feature is also the source of error in the simulation which can be mitigated using known techniques.

Empirical Risk:
The empirical risk is defined as a metric quantifying the discrepancy between the predicted estimator and the actual label in quantum machine learning.

**Figures**

**Figure 1:** The tree on the left shows how the evolutionary tree based hybrid quantum-classical mechanism behaves over the generations. The quantum circuits (represented by nodes) are branched in the tree, and actions (shown of the right of the figure) are performed on these circuits. The evolutionary scheme selects the circuit which produces the best result and carry it out over the next generations. A schematic description of potential modifications (mutations) to the current circuit: (a) illustrates the current circuit diagram within a given generation. The subsequent figures below illustrate plausible actions that can be applied to the existing circuit. Operation (b) modifies the rotation angle of an existing gate. It is also viable to perform actions such as (c) deleting a gate which exhibits a negative influence on the objective function and (d) inserting a new gate, which can be either digital or analog.

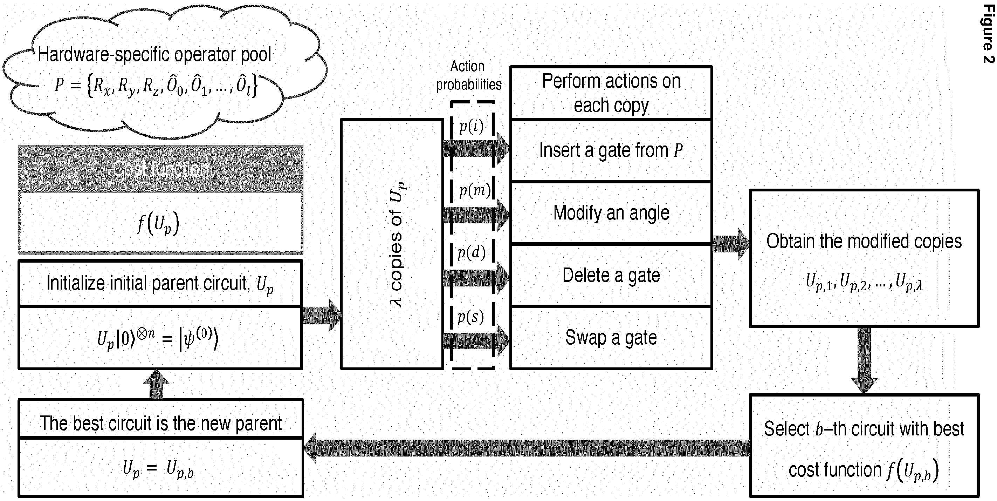

**Figure 2:** Flowchart as a diagrammatic representation of certain embodiments of the invention. Initially, a cost function is established, reflecting the problem under consideration. A set, P, of potential analog and digital gates is pre-determined based on hardware constraints. A primary circuit, $U_p$, is then crafted and serves as the parent circuit, from which $\lambda$ replicas are generated. Various operations are executed on these replicas to yield $\lambda$ new circuits. These circuits undergo evaluation based on the cost function, and the most optimal one is elevated to the status of the parent circuit, to be inherited by subsequent iterations. This cyclical process persists until certain predefined termination criteria are met.

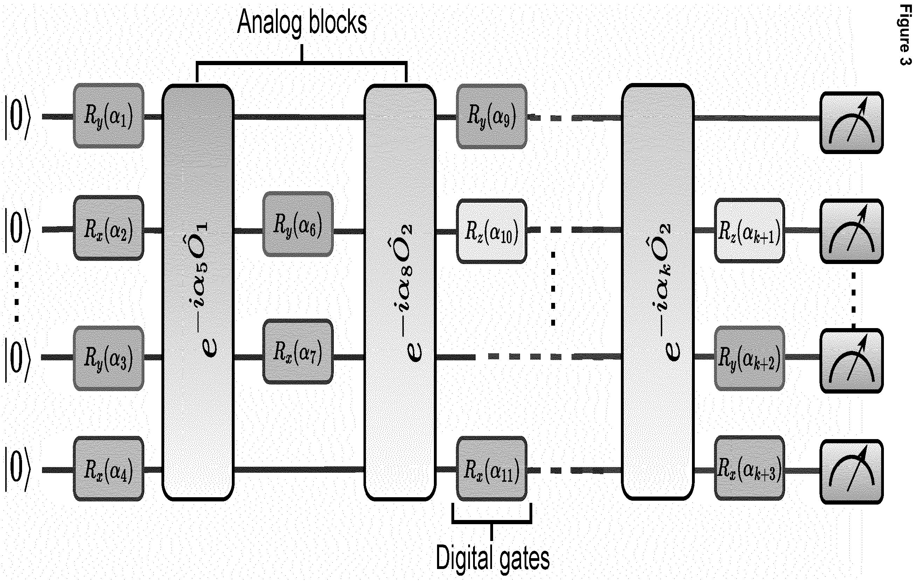

**Figure 3:** Schematic diagram of a DAQC quantum circuit, comprising single-qubit digital gates and entangling analog blocks based on the given quantum hardware and its specifications. Based on the chosen quantum hardware the available native, implementable set of operators consisting of analog global interactions, and a set of single qubit rotation gates called digital gates is selected.

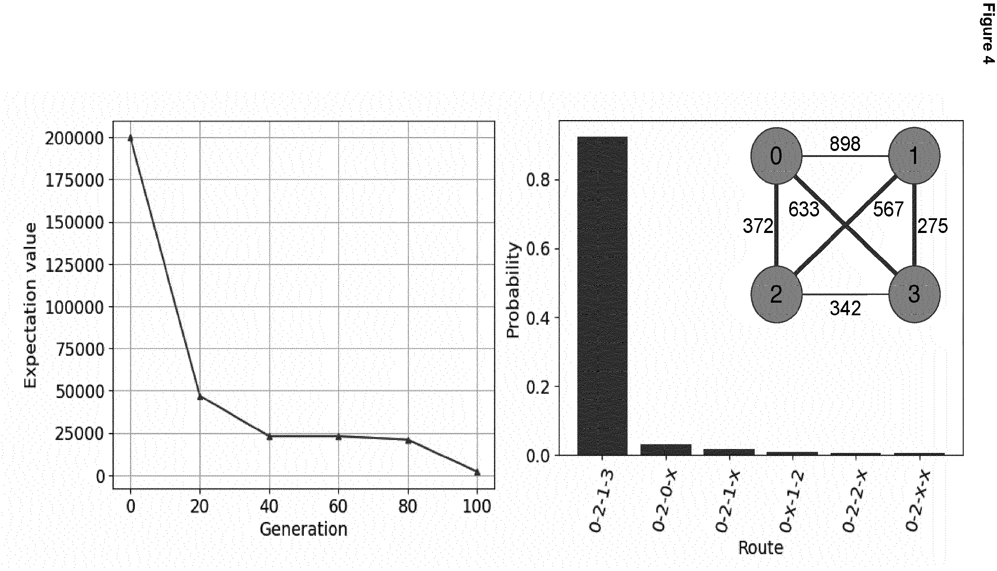

**Figure 4:** Results on the Travelling Salesman Problem (TSP). The first diagram on the left side shows an example on how the algorithm converges to the optimal solution. The second diagram on the right shows the final probability distribution, where the solutions (horizontal axis), represents the ordering where the nodes are visited. The highest measurement frequency (approx. 90%) was observed on 0-2-1-3 (eigenstate 1000001001000001) which encodes the optimal solution shown on the graph (upper right figure), where the bold lines represent the optimal path.

The final quantum circuit on this example presented a depth of 11, being 5 analog blocks and 6 blocks of single qubit rotations. This depth does not overcome the coherence time of trapped-ion quantum systems.

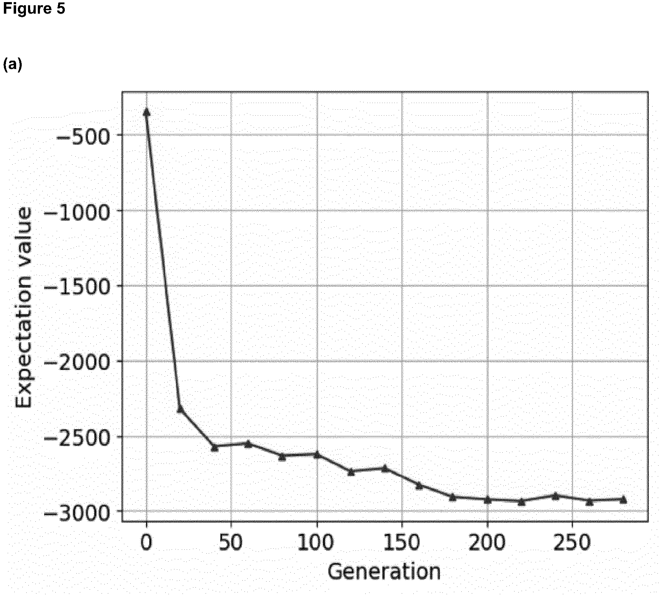

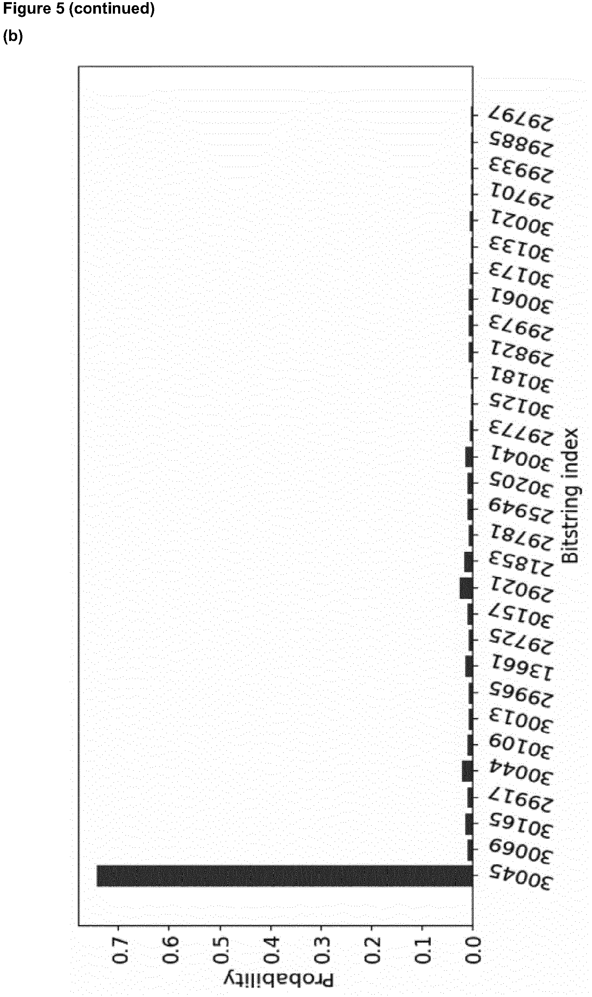

**Figure 5:** Results for the JSSP. The first diagram on the left side of the figure shows an example on how the algorithm converges to the optimal solution. The second diagram on the right side shows the final probability distribution, where the decimals 30045 and 30047, in which their binary representation encodes the first and second best solutions, were measured with highest probabilities.

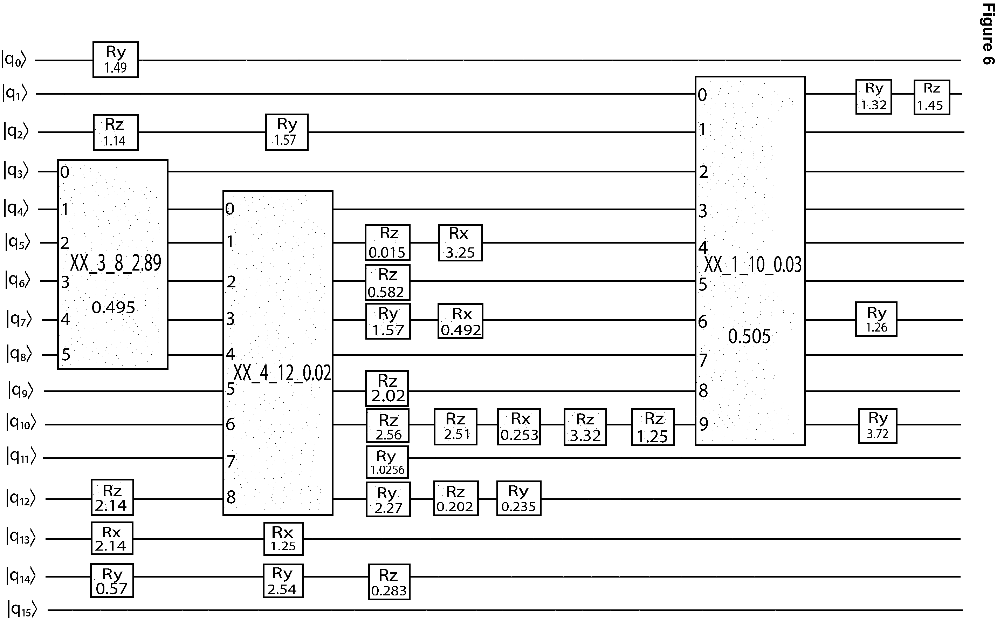

**Figure 6:** Final circuit for the JSSP example. The diagram shows a final circuit composed by 3 fully entangled analog blocks and several single qubit rotations.

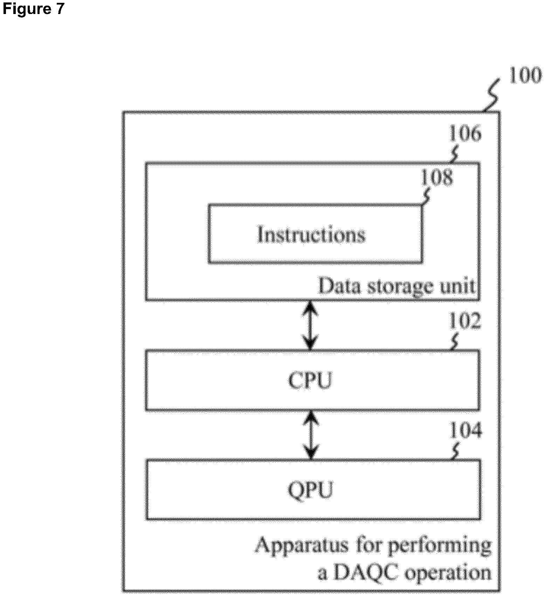

**Figure 7: Apparatus (100) for performing a DCQA operation.**

As shown in figure 7, the apparatus 100 comprises a central processing unit (CPU) 102, a quantum processing unit (QPU) 104, and a data storage unit 106.

The QPU 104 is connected to the CPU 102. The data storage unit 106 is connected to the CPU 102 and stores processor-executable instructions 108. Being executed by the CPU 102, the processor-executable instructions 108 cause the CPU 102 to implement the aspects of the present invention, as will be described further in more detail.

The number, arrangement, and interconnection of the constructive elements constituting the apparatus 100, which are shown in figure 7, are not intended to be any limitation of the present invention, but merely used to provide a general idea of how the constructive elements may be implemented within the apparatus 100. For example, each of the CPU 102 and the QPU 104 may be replaced with several corresponding processing units, as well as the data storage unit 106 may be replaced with several removable and/or fixed storage devices, depending on particular applications. Furthermore, the apparatus 100 may further comprise a transceiving unit (not shown) which, for example, may be configured to receive the processor-executable instructions 108 from a remote server and store them to the data storage unit 106 before the operation of the apparatus 100, as well as transmit the operation results of the apparatus 100 to the remote server.

The CPU 102 may be implemented as a general-purpose processor, single-purpose processor, microcontroller, microprocessor, application specific integrated circuit (ASIC), field programmable gate array (FPGA), digital signal processor (DSP), complex programmable logic device, etc. The CPU 102 may be implemented as any combination of one or more of the aforesaid. As an example, the CPU 102 may be a combination of two or more microprocessors.

The QPU 104 may refer to a physical (fabricated) or simulated processor that contains a number of interconnected qubits. In this sense, the QPU 104 serves a quantum information storage device. The QPU 104 may include a single quantum processor, or two or more quantum processors. The QPU 104 may be based on a couple of Rydberg atoms held by optical tweezers in vacuum, or based on a 2D grid of transmon qubits on a chip. The QPU 104 may also take the form of a superconducting quantum processor. The superconducting quantum processor may include multiple qubits and a plurality of superconducting coupling devices operable to selectively connect the qubits in pairs and couple the pairs therebetween. Examples of the superconducting coupling device may include radio frequency superconducting quantum interference devices (rf-SQUIDs) and direct current SQUIDs (dc-SQUIDs), which couple the qubits together by magnetic flux.

Alternatively, charge-based coupling devices may be used in the QPU 104.

The data storage unit 106 may be implemented as a classical nonvolatile or volatile memory used in the modern electronic computing machines. As an example, the nonvolatile memory may include Read-Only Memory (ROM), ferroelectric Random- Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Bluray discs), etc. As for the volatile memory, examples thereof include Dynamic RAM, Synchronous DRAM (SDRAM), Double Data Rate SDRAM (DDR SDRAM), Static RAM, etc.

The processor-executable instructions 108 stored in the data storage unit 106 may be configured as a computer-executable code which causes the CPU 102 to implement the aspects of the present invention. The computer-executable code for carrying out operations or steps for the aspects of the present invention may be written in any combination of one or more programming languages, such as Java, C++, or the like. In some examples, the computer-executable code may be in the form of a high-level language or in a pre-compiled form and be generated by an interpreter (also pre-stored in the data storage unit 106).

**Examples**

Computational experiments

The method of the invention in certain embodiments was applied to two known optimization problems, namely the Travelling Salesman Problem (TSP) and the Job-shop scheduling problem (JSSP).

For the implementation, in both examples, the operator pool was $\{R_x, R_y, R_z, \hat{O}_1\}$, where $\hat{O}_1$ is a native analog-block from trapped-ion quantum systems, given by

$$\hat{O}_1 = e^{-i\alpha \sum_{i \neq j} X_i X_j} \qquad (2)$$

and $R_x$, $R_y$ and $R_z$ are digital, single-qubit rotations. The analog blocks can be applied to any subset of qubits and the angle $\alpha$ of each block is chosen according to the evolutionary algorithm.

Regarding the hyperparameters, the action probabilities (see Fig. 2) were $p(i) = 0.5$, $p(m) = 0.3$, $p(d) = 0.1$ and $p(s) = 0.1$. The amount of copies was $\lambda = 4$. The number of generations was limited by 400 without stop criteria.

Example 1: Travelling salesman problem - Complete 4-node graph

The Traveling Salesman Problem (TSP) is a combinatorial optimization problem where the goal is to find the shortest possible route that visits a set of cities exactly once and returns to the origin city. Computationally, TSP is NP-hard, making it computationally challenging to solve as the number of cities (nodes) increases.

Mapping the TSP to an Ising spin-glass Hamiltonian involves creating an Ising model where the energy states correspond to the lengths of the possible tours (routes through the cities). A lower energy state corresponds to a shorter tour. In the Ising model, each spin represents a binary decision about a transition between two cities. In this approach, the Traveling Salesman Problem (TSP) is first formulated as a Quadratic Unconstrained Binary Optimization (QUBO) problem. The QUBO formulation is a specific type of optimization problem where the goal is to minimize a quadratic function, and all the variables are binary, meaning they take on values of 0 or 1. In the context of the TSP, these binary variables represent whether or not a particular path between two cities is part of the tour.

The objective function that is to be t minimized in the QUBO problem is the total distance of the tour, and this function is quadratic because the presence of a path in the tour (or not) can depend on pairs of binary variables (representing the paths between pairs of cities). Constraints of the TSP, like visiting each city only once, are incorporated into the QUBO objective function as penalty terms, ensuring that the solutions adhering to these constraints are favored during the optimization process.

Once the TSP formulated is formulated as a QUBO problem, one can then map it to an Ising spin-glass model. The Ising spin-glass model is a mathematical model used in statistical mechanics to represent systems with interacting spins on a lattice. Here, however, the Ising spin-glass model is used to solve combinatorial optimization problems. The binary variables in the QUBO formulation (0 and 1) are translated into the Ising model variables, which are spin values that can be either spin-up (+1) or spin-down (-1).

To encode the TSP with N cities, $N^2$ qubits are required in the Ising model. Each qubit represents a possible connection between two cities in the problem, and the state of the qubit (spin-up or spin-down) indicates whether the connection is used in a solution. The interactions between qubits represent the distances between the cities and the constraints of the problem. The Ising model's Hamiltonian (energy function) is constructed in such a way that its ground state (the state of lowest energy) corresponds to the shortest possible route in the TSP that satisfies all constraints. There are various other ways to encode the TSP as a Hamiltonian ground state problem and the method of the invention is applicable to different encoding schemes as well.

The final Ising spin-glass Hamiltonian encoding the TSP takes the form

$$H_f = \sum_{i=1}^{n} h_i Z_i + \sum_{i<j} J_{ij} Z_i Z_j \quad (Eq.\,1)$$

where $h_i$ and $J_{ij}$ are the local longitudinal fields and the interaction terms. And $Z_i$ are Pauli-z operators. The ground state of this Hamiltonian encodes the solution to the problem. Therefore, the cost function is defined as the expectation value of the Hamiltonian $\langle H_f \rangle$.

Example 2: 16-qubit spin-glass Ising Hamiltonian (JSSP)

The job shop scheduling problem (JSSP) is a classic optimization problem in operations research where the objective is to find the most efficient way to schedule jobs on a set of machines, ensuring that each job is completed following a certain order of operations and no two jobs are on the same machine at the same time. Solving the JSSP is notoriously difficult, as its considered an NP-hard problem.

Representing the JSSP as an Ising spin-glass Hamiltonian (as in Eq. (1)) involves encoding the scheduling problem in a way that the energy of the system represents the cost or makespan (total completion time) of the schedule, where a lower "energy" state corresponds to a more optimal schedule. The spins in the system represent whether a particular job is scheduled at a certain time on a certain machine or not. The interactions between spins take into account the constraints of the JSSP, like jobs not being on the same machine at the same time and the ordering of operations. The energy expectation value is the cost function. The4444 results were achieved with a circuit depth of 10 (see Fig. 5).

**Claims**

1. A computer-implemented method for solving an optimization problem with a given quantum hardware using a Digital-Analog Quantum Computation (DAQC) operation in a multi-qubit system, comprising:
   by using a central processing unit (CPU):

   - receiving a problem Hamiltonian being defined based on the multi-qubit system and indicative of at least one first pair of interconnected qubits in the multi-qubit system, the problem Hamiltonian encodes the optimization problem and is indicative of at least one second pair of interconnected qubits in the multi-qubit system;
   - based on the problem Hamiltonian, obtaining an intermediate quantum circuit for performing the DAQC operation, the intermediate quantum circuit comprising at least one analog block, and the at least one analog block having a set of operating parameters;
   - based on the intermediate quantum circuit and a pool of operators provided by the given quantum hardware, obtaining an optimal set of digital and analog operations to optimize a cost function encoded in the problem Hamiltonian, obtaining an optimal quantum circuit for performing the DAQC operation; and

   - providing an optimal quantum circuit to a quantum processing unit (QPU).

2. Computer-implemented method of claim 1, wherein the set of operating parameters of the at least one analog block comprises rotation angles.

3. Computer-implemented method of claim 1 or 2, wherein the cost function is represented by an expectation value of the problem Hamiltonian or, if quantum machine learning is applied, by an empirical risk.

4. Computer-implemented method of claim 3, wherein the cost function is minimized to find an optimal solution to the optimization problem.

5. Computer-implemented method of any of claims 1 to 4, wherein each qubit in the intermediate quantum circuit is initialized, in particular in the 10) state or another predefined state suitable for the given problem, generating a first parent circuit and providing at least one copy of the first parent circuit.

6. Computer-implemented method of any of claims 1 to 5, wherein a quantum evolutionary algorithm, such as a tree-based optimization algorithm, is applied to the first parent circuits to generate a plurality of first child quantum circuits.

7. Computer-implemented method of claim 6, wherein the quantum evolutionary algorithm applies actions on the first parent circuits, wherein the actions are chosen from the group consisting of insertion, modification, deletion, and/or swapping of circuit elements.

8. Computer-implemented method of claim 7, wherein the cost function of the first child quantum circuits is evaluated such that the best of the first child quantum circuits is chosen as a second parent circuit from which copies are being generated and on which the quantum evolutionary algorithm is applied to generate a plurality of second child quantum circuits.

9. Computer-implemented method of any of claims 1 to 8, wherein the steps of generating child circuits from a parent circuit using the quantum evolutionary algorithm and then determining the best child circuit to become the next parent circuit is reiterated until the optimal quantum circuit is obtained.

10. Computer-implemented method of any of claims 1 to 9, wherein the intermediate quantum circuit is optimized, comprising the insertion, modification, deletion, and/or swapping of circuit elements.

11. Computer-implemented method of claim 10, where-

**EP 4 542 457 A1**

in the optimization comprises iterative steps until an optimal or near-optimal circuit configuration is reached.

12. Computer-implemented method of any of claims 1 to 11, wherein a feedback mechanism is used to retaining only those operations that optimally contribute to the objective function.

13. A data processing apparatus comprising means for carrying out the method of any of claims 1 to 12.

14. A computer program (product) comprising a computer-readable storage medium, wherein the computer-readable storage medium stores a computer code which, when executed by at least one central processing unit (CPU) causes the CPU to perform the method according to any one of claims 1 to 12.

15. A computer program (product) comprising instructions which, when the program is executed by a computer, cause the computer to carry out the method of any one of claims 1 to 12.

16. A computer program (product) comprising a computer-readable storage medium, wherein the computer-readable storage medium stores a computer code which, when executed by at least one central processing unit (CPU), causes the CPU to perform the method any one of claims 1 to 12.

17. Use of an evolutionary optimization algorithm to solve an optimization problem with a given quantum hardware using a Digital-Analog Quantum Computation (DAQC) operation in a multi-qubit system.

**Figure 1**

**Figure 2**

Hardware-specific operator pool
$$P = \{R_x, R_y, R_z, \hat{O}_0, \hat{O}_1, ..., \hat{O}_l\}$$

Cost function

$$f(U_p)$$

Initialize initial parent circuit, $U_p$

$$U_p|0\rangle^{\otimes n} = |\psi^{(0)}\rangle$$

The best circuit is the new parent

$$U_p = U_{p,b}$$

$\lambda$ copies of $U_p$

Action probabilities

$p(i)$

$p(m)$

$p(d)$

$p(s)$

Perform actions on each copy

Insert a gate from $P$

Modify an angle

Delete a gate

Swap a gate

Obtain the modified copies

$$U_{p,1}, U_{p,2}, ..., U_{p,\lambda}$$

Select $b$–th circuit with best cost function $f(U_{p,b})$

**Figure 3**

**Figure 4**

**Figure 5**

**(a)**

**Figure 5 (continued)**

(b)

**Figure 6**

**Figure 7**

**EUROPEAN SEARCH REPORT**

Europäisches
Patentamt
European
Patent Office
Office européen
des brevets

Application Number

EP 23 20 5496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRANKEN LUKAS ET AL: "Quantum Circuit Evolution on NISQ Devices", 2022 IEEE CONGRESS ON EVOLUTIONARY COMPUTATION (CEC), IEEE, 18 July 2022 (2022-07-18), pages 1-8, XP034179976, DOI: 10.1109/CEC55065.2022.9870269 [retrieved on 2022-09-06] * abstract; page 1 - page 7; figures 2,3 * | 1-17 | INV. G06N10/60 ADD. G06N10/40 |
| A | ARTHUR G RATTEW ET AL: "A Domain-agnostic, Noise-resistant, Hardware-efficient Evolutionary Variational Quantum Eigensolver", ARXIV.ORG, CORNELL UNIVERSITY LIBRARY, 201 OLIN LIBRARY CORNELL UNIVERSITY ITHACA, NY 14853, 22 October 2019 (2019-10-22), XP081584871, * abstract; Sections I-VI and IX; figure 2 * | 1-17 | |

TECHNICAL FIELDS
SEARCHED (IPC)

G06N

The present search report has been drawn up for all claims

| Place of search | Date of completion of the search | Examiner |
|---|---|---|
| The Hague | 11 April 2024 | Klasen, TJ |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                             
& : member of the same patent family, corresponding document

EPO FORM 1503 03.82 (P04C01)